(19) Europäisches Patentamt

European Patent Office

Office européen des brevets

(11) EP 0 884 593 A2

(12) **EUROPÄISCHE PATENTANMELDUNG**

(43) Veröffentlichungstag:
16.12.1998 Patentblatt 1998/51

(51) Int. Cl.⁶: $G01N\ 33/497$, $C05F\ 17/00$

(21) Anmeldenummer: 98110527.3

(22) Anmeldetag: 09.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.06.1997 DE 19724993

(71) Anmelder:
Schwarting-Uhde GmbH,
Umwelt- und Bioverfahrenstechnik
24941 Flensburg (DE)

(72) Erfinder: Tenbrink, Jürgen
48565 Steinfurt (DE)

(74) Vertreter:
Kierdorf, Theodor, Dipl.-Ing.
Frankenforster Strasse 135-137
51427 Bergisch Gladbach (DE)

(54) **Dynamische Leistungsregelung für biologische Stoffwechsel-prozesse**

(57) Bei einem Verfahren zur Regelung der Umsetzungsleistung bei der Verrottung von Bioabfall wird wenigstens eine Zustandsgröße des Umsetzungsprozesses meßtechnisch erfaßt und zur Regelung wenigstens eines Prozeßparameters verwendet. Das Verfahren zeichnet sich dadurch aus, daß die momentane Umsetzungsleistung repräsentierende Werte in verschiedenen Zeitintervallen ermittelt werden und daß eine Änderung des betreffenden Prozeßparameters aufgrund eines Vergleichs der die Umsetzungsleistung repräsentierenden Werte über eine vorgebbare Zykluszeit derart erfolgt, daß bei einer Erhöhung der Umsetzungsleistung eine Verstärkung der Änderung und bei Verringerung der Umsetzungsleistung eine Rückführung der Änderung bewirkt wird. Neben wenigstens einer Zustandsgröße wird der Mengenstrom eines Eduktes oder eines Produktes des Umsetzungsprozesses meßtechnisch erfaßt und hieraus wird die umgesetzte Menge an organischer Substanz pro Zeitintervall berechnet.

EP 0 884 593 A2

**Beschreibung**

Die Erfindung betrifft ein Verfahren zur Optimierung der Umsetzungsleistung beim Abbau organischer Substanz, insbesondere zur Regelung der Umsetzungsleistung bei der Verrottung von Bioabfall, bei welchem wenigstens eine Zustandsgröße des Umsetzungsprozesses meßtechnisch erfaßt wird und zur Regelung Wenigstens eines Prozeßparameters verwendet wird, wobei neben wenigstens einer Zustandsgröße der Mengenstrom eines Edukts oder eines Produkts meßtechnisch erfaßt wird und hieraus die Umsetzungsleistung repräsentierende Werte ermittelt werden.

Bei biologischen Stoffwechselprozessen, beispielsweise bei der aeroben Verrottung organischen Materials unter Einwirkung von Mikroorganismen und Sauerstoff, ist es bekannt, den Umsetzungsprozeß nach einer oder mehrerer Zustandsgrößen wie beispielsweise Temperatur, Sauerstoffgehalt oder dergleichen zu regeln. Bei einer solchen Regelung werden zumeist eine oder mehrere Zustandsgrößen des Prozesses fortlaufend erfaßt und mit einer oder mehreren Führungsgroßen verglichen, die als konstante Sollwerte vorgegeben werden, und abhängig von diesem Vergleich im Sinne einer Angleichung an die Führungsgröße angepaßt. Die Zustandsgrößen geben unmittelbar Aufschluß über den Zustand des Prozesses, beispielsweise ob dieser bei zu niedriger oder zu hoher Temperatur oder aerob oder anaerob abläuft. Durch Messung der Sauerstoffgehalte und der Regelung der Luftzufuhr zum Prozeß kann beispielsweise der Umsetzungsprozeß dahingehend beeinflußt werden, daß die Sauerstoffsättigung oder die Temperatur angehoben oder gesenkt werden.

Diese Art der Regelung ist insoweit nachteilhaft, als daß die meßtechnische Erfassung der Zustandsgrößen lediglich Aufschluß über den momentanen Zustand des Prozesses gibt und keine Rückschlüsse auf die Umsetzungsgeschwindigkeit des Prozesses zuläßt. Eine optimale Leistungsregelung ist so nicht möglich.

Ein Verfahren zur Steuerung der Umsetzungsleistung ist beispielsweise in der EP 0 391 753 beschrieben. Die EP 0 391 753 beschreibt ein Verfahren und eine Vorrichtung zur Behandlung eines feuchten, vergärbaren organischen Produkts mittels Belüftung mit Verfahrenssteuerung. Diese Anmeldung setzt ein Verfahren zur Regelung der Umsetzungsleistung als bekannt voraus, bei welchem die Sauerstoffzufuhr als Funktion einer gemessenen Zustandsgröße des Umsetzungsprodukts, beispielsweise der Temperatur des Umsetzungsprodukts verändert wird. Der EP 0 391 753 ist zu entnehmen, daß das bekannte Verfahren mit Nachteilen behaftet ist, da die während des Umsetzungsprozesses gemessenen Zustandsgrößen keinen tatsächlichen Aufschluß über den energetischen Zustand des Umsetzungsprodukts liefern. In der EP 0 391 753 wird daher eine Regelung der Luftzufuhr vorgeschlagen, bei welcher auf an sich bekannte Art und Weise während des Umsetzungsprozesses eine Zustandsgröße des Produktes ermittelt wird, die mit einem vorgegebenen Sollwert verglichen wird, der als ideal für den Ablauf des Umsetzungsprozesses ermittelt wurde. Die Luftzufuhr wird aufgrund des Vergleichs mit dem Sollwert verändert. Als zu messende Zustandsgröße dient die Temperatur der abgeführten Luft, nicht, wie im Stand der Technik bekannt, die Temperatur des ausgetragenen Umsetzungsprodukts. Es wird keine konstante Sollwertvorgabe gemacht, vielmehr dient als Sollwert eine Sollwertfunktion. Die Temperatur der am Prozeßausgang ausgetragenen Luft wird nach einem gewissen vorangegangenen Umsetzungszeitraum gemessen, so daß diese mit dem linearen Bereich der vorgegebenen Sollwertkurve vergleichbar ist.

Das in der EP 0 391 753 beschriebene Verfahren vermeidet also den Nachteil der Vorgabe eines festen Sollwertes als Führungsgröße durch Verwendung einer produktspezifischen Sollwertkurve als Vergleichsbasis. Das Verfahren hat jedoch den Nachteil, daß diese Sollwertkurve für jede Zusammensetzung und Art des Umsetzungsproduktes neu ermittelt bzw. vorgegeben werden muß. Außerdem liefert das Verfahren keinen direkten Aufschluß über die Umsetzungsgeschwindigkeit des Prozesses.

Ein Verfahren der eingangs genannten Art ist beispielsweise aus der EP 0 606 119 bekannt, wobei dort für die Abbauphase des aus drei Phasen bestehenden Umsetzungsprozesses vorgeschlagen wird, die pro Zeit abgebaute $CO_2$-Menge berechnet aus dem gemessenen $CO_2$-Gehalt in der Abluft und der pro Zeit durch den Reaktor hindurchgeführten Luftmenge durch Regelung der Luftzufuhr zu maximieren. In Abhängigkeit des $CO_2$-Gehalts in der Abluft wird die dem Rotteprozeß zugeführte Luftmenge geregelt, und zwar so, daß die zugeführte Luftmenge pro Zeit verkleinert wird, solange der $CO_2$-Gehalt in der Abluft steigt. Erreicht der $CO_2$-Gehalt einen kritischen oberen Grenzwert, wird die zugeführte Luftmenge pro Zeit wieder gesteigert, wobei versucht wird, den $CO_2$-Gehalt in der Abluft nahe eines oberen Grenzwerts zu halten. Insoweit erfolgt eine Sollwertvorgabe durch den maximal zulässigen $CO_2$-Gehalt.

Das aus der EP 0 606 119 bekannte Verfahren liefert nur Aufschluß über den unmittelbaren Einfluß der Steuerung der Luftzufuhr auf den Umsetzungsprozeß, wobei der Zielpunkt der Regelung durch den maximal zulässigen $CO_2$-Gehalt vorgegeben ist. Der $CO_2$-Gehalt und der durch den Reaktor hindurchgeführte Luftvolumenstrom sind voneinander abhängige Parameter, deren Abhängigkeit voneinander aufgrund der Sollwertvorgabe des $CO_2$-Grenzwerts nicht hinreichend berücksichtigt ist. Aufgrund des fest vorgegebenen Grenzwertes für den $CO_2$-Gehalt (Konzentration), erhält man keinen Aufschluß darüber, ob die gebildete Menge $CO_2$ als Produkt der Konzentration und der abgeführten Luftmenge bzw. des durch den Reaktor geführten Luftvolumenstroms nicht bei einem anderen Sollwert für die $CO_2$-Konzentration bei entsprechend geändertem Luftvolumenstrom größer ist. Eine Maximierung der Umsetzungsleistung ist also mit diesem Verfahren nicht möglich.

Aufgabe der Erfindung ist es daher, ein Verfahren der eingangs genannten Art derart weiterzubilden, daß eine direkte Regelung der Umsetzungsgeschwindigkeit im Sinne einer Einstellung der größtmöglichen Umsetzungsgeschwindigkeit des Stoffwechselprozesses gewährleistet ist, wobei das Verfahren unmittelbar Aufschluß darüber liefern soll, welcher Wert einer Zustandsgröße zu welchem Zeitpunkt einen optimalen Stoffumsatz gewährleistet.

Die Aufgabe wird gemäß der Erfindung dadurch gelöst, daß die momentane Umsetzungsleistung repräsentierende Werte in verschiedenen Zeitintervallen ermittelt und miteinander verglichen werden und daß eine Änderung des betreffenden Prozeßparameters aufgrund des Vergleichs der die Umsetzungsleistung repräsentierenden Werte über eine vorgebbare Zykluszeit derart erfolgt, daß bei einer Erhöhung der Umsetzungsleistung eine Verstärkung der letzten Änderung und bei einer Verringerung der Umsetzungsleistung eine Rückführung dieser Änderung bewirkt wird, wobei eine erste Änderung eines Prozeßparameters von einem vorgegebenen Startwert vorgenommen wird, keine weitere Änderung des betreffenden Prozeßparameters erfolgt, wenn die maximale Umsetzungsleistung erreicht wird und wobei keine Vorgabe eines Sollwerts oder einer Sollwertkurve für einen beeinflußbaren Prozeßparameter oder für eine Zustandsgröße oder für eine maximal anzustrebende Umsetzungsleistung erfolgt.

Bei dem erfindungsgemäßen Verfahren erfolgt keine quantitative Vorgabe für die maximale Umsetzungsleistung und/oder eine Zustandsgröße, vielmehr ergibt sich die maximale Umsetzungsleistung aus dem Prozeß selbst.

Das Verfahren gemäß der Erfindung vermeidet die Vorgabe eines Sollwerts für eine Zustandsgröße als Konstante bzw. die Vorgabe einer Sollwertkurve, vielmehr wird der Vergleich zwischen zwei Ergebnissen aus dem Prozeß durchgeführt, wobei der Sollwert durch die Art der Regelung nicht konstant ist, so daß in vorteilhafter Art und Weise eine selbstoptimierende Leistungsregelung erhalten wird. Die Regelung bezieht sich direkt auf die Umsetzungsleistung so daß eine Änderung der beeinflußbaren Prozeßparameter als direkte Reaktion auf eine sich ändernde Umsetzungsleistung erfolgt. Dies liefert unmittelbar Aufschluß darüber, welcher Wert einer Zustandsgröße zu welchem Zeitpunkt einen optimalen Stoffumsatz gewährleistet.

Vorteilhafterweise wird eine erste Änderung eines Prozeßparameters ausgehend von einem vorgegebenen Startwert vorgenommen. Die Regelung wird dabei zunächst veranlaßt, eine Änderung vorzunehmen, die einen Prozeßparameter verändert. Nach Veränderung des betreffenden Prozeßparameters wird die Umsetzungsleistung bilanziert. Ergibt die Bilanzierung der Umsetzungsleistung eine Erhöhung dieser Leistung, wird die zuletzt vorgenommene Veränderung des Prozeßparameters verstärkt.

Es ist für den Fachmann ersichtlich, daß die Regelung gemäß der Erfindung sich auf jedwede Art von stofflichen Umsetzungsprozessen anwenden läßt.

Vorzugsweise erfolgt die Änderung des betreffenden Prozeßparameters, abgesehen von einer ersten vorbestimmten Änderung, proportional zu dem Verhältnis der in aufeinanderfolgenden Zyklen ermittelten Leistungswerte. Die Änderung erfolgt also in einer vorwählbaren Abhängigkeit von dem Regelungsergebnis. Beispielsweise kann die Änderung proportional zum Verhältnis der in Zwei Meßzyklen ermittelten bzw. berechneten Enthalpien erfolgen. Alternativ kann jedoch auch eine differenzproportionale Änderung vorgesehen sein.

Hierzu werden die zur Ermittlung der Umsetzungsleistung meßtechnisch erfaßten Größen zweckmäßigerweise jeweils über die Dauer eines Zyklus gemittelt.

Vorzugsweise wird neben wenigstens einer Zustandsgröße der Mengenstrom eines Edukts oder eines Produkts des Umsetzungsprozesses meßtechnisch erfaßt und hieraus die umgesetzte Menge an organischer Substanz pro Zeitintervall errechnet oder qualitativ ermittelt, wobei für das erfindungsgemäße Verfahren eine qualitative Aussage über eine evtl. gestiegene oder gesunkene Umsetzungsleistung ausreichend ist.

Das erfindungsgemäße Verfahren kann beispielsweise durch eine aerobe Umsetzung der organischen Substanz erfolgen. Als Prozeßparameter können dann die Temperatur und/oder die Luftzufuhr zu dem Prozeß geregelt werden.

Beispielsweise können zur Errechnung der Menge der umgesetzten organischen Substanz der Massenstrom der zugeführten Luft und die Sauerstoffkonzentration bei Prozeßeingang und -ausgang gemessen werden. Da der Sauerstoffverbrauch direkt proportional dem Abbau organischer Substanz ist, ermöglicht das Ermitteln der Sauerstoffkonzentration bei Prozeßeingang und -ausgang sowie die Ermittlung des Volumenstroms an zugeführter Luft eine direkte Berechnung oder qualitative Ermittlung der Umsetzungsleistung.

Gemäß einer bevorzugten Ausführungsform der Erfindung werden zur Errechnung oder qualitativen Ermittlung der Menge der umgesetzten organischen Substanz der Massenstrom der zugeführten Luft und die Temperatur der Zuluft und der Abluft gemessen.

Alternativ kommen als zu messende Zustandsgrößen der Kohlendioxidgehalt bei Prozeßeingang und -ausgang oder die Wasserfreisetzung während des Umsetzungsprozesses in Betracht.

Weiterhin kann es zweckmäßig sein, wenn neben wenigstens einer Zustandsgröße der Mengenstrom eines Eduktes oder eines Produktes meßtechnisch erfaßt wird und hieraus die umgesetzte Menge eines weiteren Edukts oder Produkts des Prozesses pro Zeitintervall errechnet oder qualitativ ermittelt wird. Dem liegt die Erkenntnis zugrunde, daß nicht nur die Menge an umgesetzter organischer Substanz direkt oder indirekt über die Umsetzungsleistung Aufschluß gibt, vielmehr können hierüber auch die Mengenströme anderer Edukte oder Produkte des Prozesses unmittelbar Aufschluß geben.

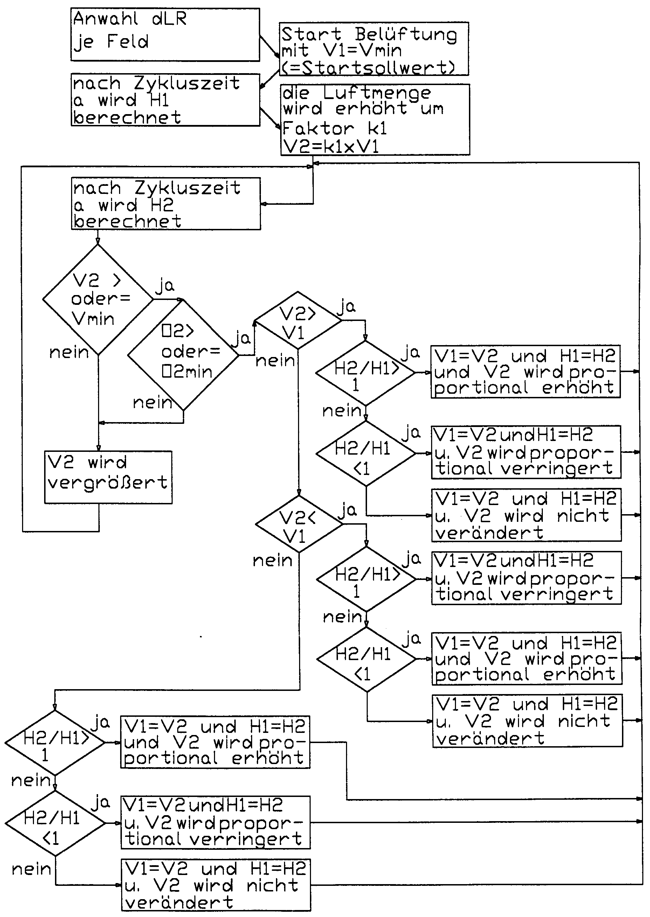

Die Erfindung wird nachstehend anhand eines Ausführungsbeispiels und anhand des in der Figur dargestellten Funktionsablaufplans erläutert. Wenn in einem Prozeß die Edukte und Produkte bekannt sind und sich ein oder mehrere Prozeßzustände meßtechnische erfassen lassen, so kann die Umsetzungsleistung anhand eines Prozeßparameters in Verbindung mit einer Mengenmessung geregelt werden. Nachstehend sei dies anhand eines Beispiels für die Kompostierung von Bioabfällen erläutert. Die Wärmefreisetzung des exothermen Prozesses dient als Maß für den Abbau organischer Trockensubstanz.

Q = f (Abbau organischer Trockensubstanz) = m x $\Delta$h , wobei Q = Wärmestrom, m = Massenstrom und $\Delta$h = Enthalpiedifferenz. Im Rotteprozeß wird die Temperatur der Abluft und Zuluft gemessen. Die Enthalpie (h) der Luft läßt sich als Funktion der Temperatur und der relativen Feuchte berechnen:

$$h = f (\vartheta; \varphi),$$

wobei h = Enthalpie, $\vartheta$ = Temperatur und $\varphi$ = relative Feuchte der Luft.

Die Zustandsgrößen Temperatur und relative Luftfeuchtigkeit lassen sich meßtechnisch erfassen. Mit Hilfe einer Volumenstrommessung läßt sich der Massenstrom wie folgt ausdrücken:

$$m = V \times \rho,$$

wobei m = Massenstrom, V = Volumenstrom und $\rho$ = Dichte der Luft, wobei die Dichte der Luft von der Temperatur, der Feuchte sowie den herrschenden Drücken abhängt:

$$\rho = f (\vartheta; \varphi; P),$$

wobei $\rho$ = Dichte der Luft, $\vartheta$ Temperatur, $\varphi$ = relative Feuchte der Luft und p = Gesamtdruck der Luft.

Das Produkt aus der Enthalpiedifferenz der Zu- und Abluft und dem Massenstrom ist gleich dem Wärmestrom Q. Die Regelung erfolgt wie folgt:

Zunächst wird ein Startwert für den Volumenstrom an zuzuführender Luft vorgegeben:

$$V_0 = konst.$$

Anschließend wird der Wärmestrom wie vorstehend beschrieben ermittelt:

$$Q_0 = m_0 \times \Delta h_0$$

Nach einer einstellbaren bzw. vorgebbaren Zykluszeit wird die Luftzufuhr erhöht und der sich hieraus ergebende Wärmestrom ermittelt. Hat der Wärmestrom zugenommen, so wird die Belüftungsrate erhöht. Nachdem eine bestimmte Zeit verstrichen ist, die der vorgegebenen Zykluszeit entspricht, wird erneut der Wärmestrom ermittelt und mit dem zuvor ermittelten Wärmestrom verglichen. Hat sich der aktuelle Wert weiter erhöht, wird die Regelung veranlaßt, die Luftzufuhr zu erhöhen, hat sich der Wert verschlechtert, so wird die vorhergehende Änderung zurückgeführt. Hierdurch wird der Prozeßumsatz bis zu einem Maximum gesteigert. Ist das Maximum an Umsetzungsleistung erreicht, wird keine weitere Änderung der Prozeßparameter veranlaßt.

In der Figur ist der Funktionsablauf der anmeldungsgemäßen Leistungsregelung für eine direkt durchströmte Miete mit Saugbelüftung dargestellt. Die Miete ist in mehrere separat belüftete Felder aufgeteilt. Die Zuluft wird nicht konditioniert.

Für die Leistungsregelung werden die Temperatur, der Volumenstrom und der Druck der Abluft erfaßt. Aus der gemessenen Temperatur und dem jeweiligen Volumenstrom der Mietenabluft wird ein Wert H berechnet, der für die Regelung der Belüftungsmenge herangezogen wird. Für jedes Feld der Miete wird die Größe H in einstellbaren Zyklen mit der Zykluszeit a berechnet. Die Zykluszeit wird in Minuten eingestellt.

Folgende Meßwerte werden je Feld erfaßt:

1. Temperatur      $\vartheta$      Meßwert in °C
2. Volumenstrom      V      Meßwert in $m^3$/h
3. Druck      $p_e$      Meßwert in Pa

Der Wert H wird danach wie folgt berechnet:

$$H = h^*m$$

Mit      $h = 1{,}006^* \vartheta + X_S^*(2501{,}6 + 1{,}86^* \vartheta)$      in kJ/kg

Wobei $X_S = 0{,}622 \cdot p_S / (p_{ges} - p_S)$     in kg/kg

Wobei $p_S = 611{,}2 \cdot (1 + \vartheta/(137{,}9 + (\vartheta/15{,}86)^{1{,}35}))^{10}$     in Pa

Wobei $p_{ges} = p_{amb} + p_e$     in Pa

Mit $\vartheta$ = Meßwert in °C

$p_{amb}$ = 100.000 Pa

pe = Meßwert in Pa

und $m = \rho \cdot V / 3600$

mit $\rho = (0{,}348 \cdot (1 + pe/100.000) - 0{,}132 \cdot ps/100.000) \cdot 1/(273{,}15 + \vartheta)$     in kg/m³

mit $\vartheta$ = Meßwert in °C

und $p_S$ aus obiger Berechnung

und V = Meßwert in m³/h

Wie dem Funktionsablaufplan zu entnehmen ist, beginnt die Regelung mit einem Startwert $V_1$ als Mindestvolumenstrom, der vorgewählt wird. Dieser Mindestvolumenstrom ist derjenige Volumenstrom, der technisch mindestens erforderlich ist, damit das oder die Gebläse in einem stabilen Betriebszustand laufen.

Nach der eingestellten Zykluszeit a wenn die Mittelwerte der Temperatur, des Volumenstroms sowie des Drucks während der Zykluszeit a bestimmt. Mittels dieser Werte wird H berechnet. Nachdem der erste Wert $H_1$ bestimmt wurde, wird der zugeführte Luftvolumenstrom um einen einstellbaren Faktor $k_1$ erhöht. Nach Ablauf der Zykluszeit a wird dann ein Wert $H_2$ ermittelt. Aus dem Verhältnis von H2 zu H1 wird proportional eine Änderung des Belüftungsvolumenstroms abgeleitet, wobei zunächst überprüft wird, ob der geänderte Volumenstrom größer als der für einen sicheren Betrieb der Lüfter erforderliche Mindestvolumenstrom ist.

Ist das Verhältnis H2 zu H1 größer 1 hat der Energiestrom zugenommen, folglich wird die letzte Änderung der Belüftung proportional verstärkt.

Ergab die letzte Änderung eine Vergrößerung des Luftvolumenstroms, so wird dieser nochmals erhöht, ergab die letzte Änderung des Luftvolumenstroms eine Verringerung desselben, so wird die Verringerung proportional fortgeführt. Ist das Verhältnis H2 zu H1 kleiner 1 so wird die letzte Änderung der Belüftung invertiert. D. h., daß bei vorhergegangener Erhöhung des Luftvolumenstroms dieser verringert wird und daß bei vorhergegangener Verringerung des Luftvolumenstroms dieser vergrößert wird. Die Größe der vorzunehmenden Änderung erfolgt proportional zum Verhältnis H2 zu H1. Sollte dieses Verhältnis 1 betragen, so erfolgt keine Änderung des Luftvolumenstroms mehr, was in der Praxis kaum vorkommt, dort wird die Regelung um den Idealwert pendeln.

Die Regelung veranlaßt, daß der neue Sollwert für den Luftvolumenstrom gleich dem neu ermittelten Luftvolumenstrom wird. H1 wird zu H2 gleichgesetzt und der jeweils für H2 errechnete Wert wird gespeichert und angezeigt sowie im Trend wiedergegeben. Nach Ablauf der Zykluszeit a wird die Berechnung von H2 erneut vorgenommen und über das Verhältnis von H2 zu H1 wird der Luftvolumenstrom abhängig von der vorangegangenen Luftvolumenstromänderung ermittelt.

## Patentansprüche

1. Verfahren zur Optimierung der Umsetzungsleistung beim Abbau organischer Substanz, insbesondere zur Regelung der Umsetzungsleistung bei der Verrottung von Bioabfall, bei welchem wenigstens eine Zustandsgröße des Umsetzungsprozesses meßtechnisch erfaßt wird und zur Regelung wenigstens eines Prozeßparameters verwendet wird, wobei neben wenigstens einer Zustandsgröße der Mengenstrom eines Eduktes oder eines Produktes meßtechnisch erfaßt wird und hieraus die Umsetzungsleistung repräsentierende Werte ermittelt werden, **dadurch gekennzeichnet**, daß die die momentane Umsetzungsleistung repräsentierende Werte in verschiedenen Zeitintervallen ermittelt und miteinander verglichen werden und daß eine Änderung des betreffenden Prozeßparameters aufgrund des Vergleichs der die Umsetzungsleistung repräsentierenden Werte über eine vorgebbare Zykluszeit derart erfolgt, daß bei einer Erhöhung der Umsetzungsleistung eine Verstärkung der letzten Änderung und bei einer Verringerung der Umsetzungsleistung eine Rückführung dieser Änderung bewirkt wird, wobei eine erste Änderung eines Prozeßparameters ausgehend von einem vorgegebenen Startwert vorgenommen wird, keine weitere Änderung des betreffenden Prozeßparameters erfolgt, wenn die maximale Umsetzungsleistung erreicht wird und wobei keine Vorgabe eines Sollwerts oder einer Sollwertkurve für einen beeinflußbaren Prozeßparameter oder für eine Zustandsgröße oder für eine maximal anzustrebende Umsetzleistung erfolgt.

2. Verfahren nach Anspruch 1, **dadurch gekennzeichnet,** daß die Änderung des betreffenden Prozeßparameters abgesehen von einer ersten vorbestimmten Änderung proportional zu dem Verhältnis der in aufeinanderfolgenden Zyklen ermittelten Werte für die Umsetzungsleistung erfolgt.

3. Verfahren nach Anspruch 1, **dadurch gekennzeichnet**, daß die Änderung proportional zu der Differenz der in aufeinanderfolgenden Zyklen ermittelten Werte für die Umsetzungsleistung erfolgt.

4. Verfahren nach einem der Ansprüche 1 bis 3, **dadurch gekennzeichnet**, daß die zur Ermittlung der Umsetzungsleistung meßtechnisch erfaßten Größen jeweils über die Dauer eines Zyklus gemittelt werden.

5. Verfahren nach einem der Ansprüche 1 bis 4, **dadurch gekennzeichnet**, daß neben wenigstens einer Zustandsgröße der Mengenstrom eines Eduktes oder eines Produktes meßtechnisch erfaßt wird und hieraus die umgesetzte Menge an organischer Substanz pro Zeitintervall errechnet oder qualitativ ermittelt wird.

6. Verfahren nach einem der Ansprüche 1 bis 5, **dadurch gekennzeichnet**, daß als Prozeßparameter die Temperatur und/oder die Luftzufuhr geregelt werden.

7. Verfahren nach einem der Ansprüche 1 bis 6, **dadurch gekennzeichnet**, daß zur Errechnung oder qualitativen Ermittlung der Menge der umgesetzten organischen Substanz der Massenstrom der zugeführten Luft und die Sauerstoffkonzentration bei Prozeßeingang und -ausgang gemessen werden.

8. Verfahren nach einem der Ansprüche 1 bis 6, **dadurch gekennzeichnet**, daß zur Errechnung oder qualitativen Ermittlung der Menge der umgesetzten organischen Substanz der Massenstrom der zugeführten Luft und die Temperatur der Zuluft und der Abluft gemessen werden.

9. Verfahren nach Anspruch 1, **dadurch gekennzeichnet**, daß als zu messende Zustandsgröße der Kohlendioxidgehalt bei Prozeßeingang und -ausgang dient.

Anwahl dLR
je Feld

Start Belüftung
mit V1=Vmin
(=Startsollwert)

nach Zykluszeit
a wird H1
berechnet

die Luftmenge
wird erhöht um
Faktor k1
V2=k1xV1

nach Zykluszeit
a wird H2
berechnet

V2 >
oder=
Vmin

ja

nein

□2>
oder=
□2min

ja

nein

V2>
V1

ja

nein

V2 wird
vergrößert

H2/H1>
1

ja

nein

V1=V2 und H1=H2
und V2 wird proportional erhöht

H2/H1
<1

ja

V1=V2 undH1=H2
u. V2 wird proportional verringert

V1=V2 und H1=H2
u. V2 wird nicht
verändert

V2<
V1

ja

nein

H2/H1>
1

ja

V1=V2 undH1=H2
u. V2 wird proportional verringert

nein

H2/H1
<1

ja

V1=V2 und H1=H2
und V2 wird proportional erhöht

V1=V2 und H1=H2
u. V2 wird nicht
verändert

H2/H1>
1

ja

nein

V1=V2 und H1=H2
und V2 wird proportional erhöht

H2/H1
<1

ja

V1=V2 undH1=H2
u. V2 wird proportional verringert

nein

V1=V2 und H1=H2
u. V2 wird nicht
verändert